(19) Europäisches Patentamt
European Patent Office
Office européen des brevets

(11) **EP 4 589 340 A1**

(12) **DEMANDE DE BREVET EUROPEEN**

(43) Date de publication:
**23.07.2025 Bulletin 2025/30**

(21) Numéro de dépôt: **25305056.1**

(22) Date de dépôt: **16.01.2025**

(51) Classification Internationale des Brevets (IPC):
*G01S 19/20* (2010.01)

(52) Classification Coopérative des Brevets (CPC):
**G01S 19/20;** G01S 19/47; G01S 19/49

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **17.01.2024 FR 2400466**

(71) Demandeur: **Safran Electronics & Defense**
**75015 Paris (FR)**

(72) Inventeurs:
• **DAVAIN, Loïc**
**77550 MOISSY-CRAMAYEL (FR)**
• **JARRAUD, Raphael**
**77550 MOISSY-CRAMAYEL (FR)**
• **FOUIN, Nathan**
**77550 MOISSY-CRAMAYEL (FR)**

(74) Mandataire: **Regimbeau**
**20, rue de Chazelles**
**75847 Paris Cedex 17 (FR)**

(54) **PROCÉDÉ POUR GÉNÉRER UN RAYON DE PROTECTION EN CAS D'INDISPONIBILITÉ RAIM**

(57) Procédé comprenant une itération courante, l'itération courante comprenant : évaluation de disponibilité (100, 200) d'un rayon de protection d'entrée ($HPL_{RAIM}(t)$) associé à un instant courant ($t$), résultant d'un contrôle autonome d'intégrité de récepteur, RAIM, mis en oeuvre par un récepteur de signaux satellites, et se rapportant à l'estimée d'une grandeur de navigation d'un porteur ; sélection (102, 202) d'une donnée, dans lequel : lorsque le rayon de protection d'entrée ($HPL_{RAIM}(t)$) est disponible, la donnée sélectionnée est une donnée courante obtenue à l'itération courante dépendant du rayon de protection d'entrée ($HPL_{RAIM}(t)$), sinon la donnée sélectionnée est une donnée précédente sélectionnée lors d'une sélection réalisée à une itération précédente ; détermination (108, 114, 208, 212) d'un rayon de protection de sortie ($HPL(t_k)$, $HPL(t)$) à partir de la donnée sélectionnée et d'une matrice de covariance estimée résultant d'une dernière prédiction mise en oeuvre par un filtre de Kalman.

[Fig. 2]

**Description**

**DOMAINE TECHNIQUE**

La présente divulgation concerne un procédé générant des rayons de protection. Le contrôle d'intégrité trouve avantageusement application dans l'aide à la navigation d'un porteur.

**ETAT DE LA TECHNIQUE**

Un récepteur GNSS est un dispositif capable de fournir une estimée sur la position d'un porteur sur la base de signaux émanant d'une constellation de satellite. Cette estimée est entachée d'une erreur plus ou moins grande par rapport à la position réelle du porteur.

L'estimation de la position fournie par un récepteur GNSS est conventionnellement fusionnée avec d'autres données pour générer une solution de navigation du porteur. Une telle fusion de données est couramment appelée « hybridation » ou « couplage ». En particulier, lorsque les autres données émanent d'une centrale inertielle, on parle généralement de fusion « IRS/GNSS ».

Il est par ailleurs connu d'incorporer à un récepteur GNSS un algorithme RAIM (« Receiver Autonomous Integrity Monitoring »), qui vise, comme son nom l'indique, à contrôler l'intégrité de la position élaborée par le récepteur GNSS. En particulier, une fonction de ce contrôle RAIM est de calculer un rayon de protection se rapportant à l'estimée sur la position du porteur. De façon connue en soi, le rayon de protection est une borne estimée de l'erreur maximale tolérable entre l'estimée de la position fournie par le récepteur GNSS et la vraie position du porteur.

Or, il peut arriver qu'un récepteur GNSS pourvu d'un algorithme RAIM ne soit pas capable de produire, à un instant donné, un tel rayon de protection. On dit alors que la fonction d'intégrité est indisponible. Une telle situation se produit par exemple lorsque le récepteur GNSS reçoit des signaux émanant de satellites en nombre insuffisant (autrement dit, le récepteur GNSS ne « voit » pas suffisamment de satellites).

La norme DO-384 (document RTCA « Minimum Operating Performance Standard for GNSS aided inertial system ») définit trois catégories différentes d'algorithmes d'intégrité dans un contexte de fusion IRS/GNSS.

- Catégorie 0 : la fusion IRS/GNSS ne fournit pas d'intégrité et de détection de panne satellite (SISF) supplémentaire par rapport aux capacités d'un récepteur GNSS mettant en œuvre un RAIM.
- Catégorie 1 : la fusion IRS/GNSS fournit une intégrité et une détection de panne satellite supplémentaire par rapport aux capacités du récepteur GNSS, et continue de fournir un rayon de protection.
- Catégorie 2 : la fusion IRS/GNSS fournit une intégrité, une détection de panne satellite supplémentaire et une capacité d'exclusion par rapport aux capacités du récepteur GNSS, et continue de fournir un rayon de protection.

Les catégories 1 et 2 de la norme DO-384 ont ainsi pour but d'étendre les capacités d'intégrité du récepteur GNSS. Toutefois, pour atteindre ce but, il est nécessaire d'implémenter des architectures complexes à filtres multiples, très coûteuses en charge de calcul.

**EXPOSE DE L'INVENTION**

Un but de la présente divulgation est de fournir un rayon de protection y compris lorsque le RAIM d'un récepteur GNSS n'est pas disponible, sans pour autant implémenter une fonction de détection ou exclusion de panne autonome complexe.

Il est à cet effet proposé, selon un premier aspect, un procédé itératif mis en œuvre par ordinateur, le procédé comprenant une itération courante associée à un instant courant et une itération précédente associée à un instant précédent, l'itération courante comprenant les étapes suivantes :

- réception de données de Kalman comprenant :

  - une matrice de covariance estimée, la matrice de covariance estimée résultant d'une dernière prédiction mise en œuvre par un filtre de Kalman,

- évaluation de disponibilité d'un rayon de protection d'entrée associé à l'instant courant, résultant d'un contrôle autonome d'intégrité de récepteur, RAIM, mis en œuvre par un récepteur de signaux satellites, et se rapportant à l'estimée d'une grandeur de navigation d'un porteur, l'estimée étant fournie par le récepteur de signaux satellites,
- sélection d'une donnée sur la base de l'évaluation de disponibilité, dans lequel :

- lorsque le rayon de protection d'entrée est disponible, la donnée sélectionnée est une donnée courante obtenue à l'itération courante, et dépendant du rayon de protection d'entrée,
- lorsque le rayon de protection d'entrée est indisponible, la donnée sélectionnée est une donnée précédente ayant été sélectionnée lors d'une mise en œuvre de l'étape de sélection réalisée au cours de l'itération précédente,

- détermination d'un rayon de protection de sortie, à partir de la donnée sélectionnée et des données de Kalman.

Le procédé selon le premier aspect peut également comprendre les caractéristiques optionnelles suivantes, prises seules ou combinées entre elles à chaque fois que cela est faisable techniquement.

De préférence, la matrice de covariance estimée est associée à un instant d'arrivée de la dernière prédiction, l'instant d'arrivée étant antérieur à l'instant courant.

De préférence, l'instant courant est antérieur à un instant d'arrivée d'une prochaine prédiction mise en œuvre par le filtre de Kalman.

De préférence:

- la matrice de covariance estimée est associée à un instant d'arrivée de la dernière prédiction mise en œuvre par le filtre de Kalman,
- à l'étape de détermination, il est déterminé un rayon de protection de sortie associé à l'instant d'arrivée, à partir de la donnée sélectionnée et de la matrice de covariance estimée.

De préférence:

- la matrice de covariance estimée est associée à un instant d'arrivée de la dernière prédiction mise en œuvre par le filtre de Kalman,
- les données de Kalman comprennent en outre :

  - une matrice d'évolution permettant de propager la matrice de covariance estimée de l'instant d'arrivée à l'instant courant,
  - une matrice de covariance de bruit d'évolution permettant de propager la matrice de covariance estimée de l'instant d'arrivée à l'instant courant,

- à l'étape de détermination, il est déterminé un rayon de protection de sortie associé à l'instant courant, à partir de la donnée sélectionnée, de la matrice de covariance estimée, de la matrice d'évolution et de la matrice de covariance de bruit d'évolution.

Dans un mode de réalisation, la donnée courante est un coefficient de pondération courant calculé comme un rapport entre :

- le rayon de protection d'entrée associé à l'instant courant, et
- un écart-type se rapportant à la grandeur de navigation du porteur, calculé à partir de la matrice de covariance estimée.

De préférence, le filtre de Kalman utilise des données fournies par une unité de mesure inertielle comme observations.

De préférence, le rayon de protection de sortie associé à l'instant d'arrivée est calculé comme un produit entre :

- un coefficient de pondération dépendant de la donnée sélectionnée, et
- l'écart-type se rapportant à la grandeur de navigation du porteur.

De préférence, le rayon de protection de sortie associé à l'instant courant est calculé comme un produit entre :

- un coefficient de pondération dépendant de la donnée sélectionnée, et
- un écart-type associé à l'instant courant résultant d'une propagation de l'écart-type se rapportant à la grandeur de navigation du porteur à l'aide de la matrice d'évolution et de la matrice de covariance de bruit d'évolution.

De préférence, le procédé selon le premier aspect comprend des étapes de :

- calcul d'un coefficient de référence K0 à partir d'une valeur de probabilité p prédéfinie, le coefficient de référence K0 satisfaisant la formule suivante :

$$p = Probabilité\left(|e| > K0.\sigma(t_k)\right)$$

où e désigne l'erreur qui entache l'estimée fournie par le récepteur de signaux satellites, et $\sigma(t_k)$ désigne l'écart-type se rapportant à la grandeur de navigation du porteur,
- détermination d'un maximum entre la donnée sélectionnée et le coefficient de référence, le maximum constituant le coefficient de pondération dépendant de la donnée sélectionnée.

Dans un autre mode de réalisation, dans lequel la donnée courante est le rayon de protection d'entrée.

De préférence, le procédé selon le premier aspect comprenant des étapes de :

- calcul d'un coefficient de référence à partir d'une valeur de probabilité P0 prédéfinie, le coefficient de référence satisfaisant la formule suivante :

$$P0 = Probabilité\left(|e| > K0.\sigma(t_k)\right)$$

où e désigne l'erreur qui entache l'estimée fournie par le récepteur de signaux satellites, et $\sigma(t_k)$ désigne un écart-type se rapportant à la grandeur de navigation du porteur et calculé à partir de la matrice de covariance estimée,
- calcul d'un rayon de protection intermédiaire associé à l'instant d'arrivée, le rayon de protection intermédiaire étant calculé comme un produit entre :

    - le coefficient de référence, et
    - l'écart-type se rapportant à la grandeur de navigation du porteur,

- le rayon de protection de sortie associé à l'instant d'arrivée étant un maximum entre :

    - la donnée sélectionnée, et
    - le rayon de protection intermédiaire associé à l'instant d'arrivée.

De préférence, le procédé selon le premier aspect comprend des étapes de

- calcul d'un coefficient de référence K0 à partir d'une valeur de probabilité P0 prédéfinie, le coefficient de référence K0 satisfaisant la formule suivante :

$$P0 = Probabilité\left(|e| > K0.\sigma(t_k)\right)$$

où e désigne l'erreur qui entache l'estimée fournie par le récepteur de signaux satellites, et $\sigma(t_k)$ désigne un écart-type se rapportant à la grandeur de navigation du porteur et calculé à partir de la matrice de covariance estimée,
- calcul d'un rayon de protection intermédiaire associé à l'instant courant comme un produit entre :

    - le coefficient de référence K0, et
    - un écart-type associé à l'instant courant résultant d'une propagation de l'écart-type à l'aide de la matrice d'évolution et de la matrice de covariance de bruit d'évolution,

- le rayon de protection de sortie associé à l'instant courant étant un maximum entre :

    - la donnée sélectionnée, et
    - le rayon de protection intermédiaire associé à l'instant courant.

De préférence, lequel la grandeur de navigation du porteur est une position du porteur.

Un second aspect de la présente divulgation est un produit programme d'ordinateur comprenant des instructions de code de programme pour l'exécution des étapes du procédé selon le premier aspect, lorsque ce programme est exécuté par un processeur.

Un troisième aspect de la présente divulgation est un système d'aide à la navigation d'un porteur, le système comprenant :

- un récepteur de signaux satellites configuré pour fournir une estimée d'une grandeur de navigation du porteur, et pour mettre en œuvre un contrôle autonome d'intégrité de récepteur produisant un rayon de protection se rapportant à l'estimée de la donnée de mouvement du porteur,
- une centrale inertielle configurée pour fournir une autre estimée de la grandeur de navigation du porteur,
- un module d'hybridation configuré pour coupler des données incluant l'estimée fournie par le récepteur de signaux satellite et l'autre fournie par la centrale inertielle, de sorte à produire une solution de navigation incluant une estimée consolidée de la grandeur de navigation du porteur,
- un module de traitement configuré pour mettre en œuvre le procédé itératif selon le premier aspect.

## DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

La figure 1 illustre de façon schématique un système d'aide à la navigation selon un premier mode de réalisation de l'invention.

La figure 2 est un organigramme d'étapes d'un procédé selon un premier mode de réalisation de l'invention.

La figure 3 est un organigramme d'étapes d'un procédé selon un deuxième mode de réalisation de l'invention.

La figure 4 représente des exemples de courbes d'évolution d'une erreur de position et d'un rayon de protection se rapportant à cette erreur.

Sur l'ensemble des figures, les éléments similaires portent des références identiques.

## DESCRIPTION DETAILLEE DE L'INVENTION

### 1) Système d'aide à la navigation

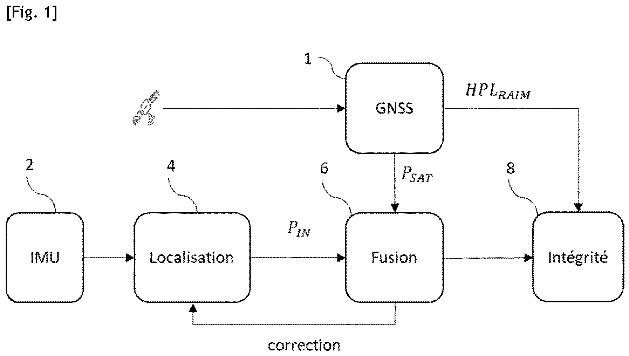

En référence à la figure 1, un système d'aide à la navigation d'un porteur tel qu'un aéronef, un véhicule terrestre ou un navire, comprend un récepteur de signaux satellite 1, une unité de mesure inertielle 2, une unité de localisation 4, un module de fusion 6, et un module d'intégrité 8.

Le système d'aide à la navigation a vocation à être embarqué sur le porteur, pour aider à sa navigation.

Le récepteur 1 de signaux satellites, plus simplement appelé récepteur 1 dans la suite, est configuré pour produire une estimée $P_{SAT}$ d'une grandeur de navigation du porteur à un instant donné t, et ce à partir de signaux émanant d'une constellation de satellite de navigation, et en appliquant une méthode connue. Le récepteur 1 est typiquement de type GNSS.

Le récepteur 1 est en outre configuré pour produire un rayon de protection se rapportant à l'estimée. Ce rayon de protection est le résultat d'une mise en œuvre d'un traitement également connu sous le nom « contrôle autonome d'intégrité de récepteur 1 » (en anglais, « Receiver Autonomous Integrity Monitoring, abrégé en RAIM). Le rayon de protection est par exemple horizontal. On le note $HPL_{RAIM}$ dans la suite.

Dans une situation idéale, le récepteur 1 produit des estimées de la grandeur de navigation (et des rayons de protections associés) périodiquement, par exemple selon une première fréquence de 1 Hz (une estimée par seconde).

Toutefois, comme indiqué dans l'introduction, il peut arriver que le récepteur 1 ne soit pas capable de produire, à un instant t donné, le rayon de protection $HPL_{RAIM}$. On dit alors que la fonction d'intégrité du récepteur 1 est indisponible. Une telle situation se produit par exemple lorsque le récepteur 1 GNSS reçoit des signaux émanant de satellites en nombre insuffisant (autrement dit, le récepteur 1 GNSS ne « voit » pas suffisamment de satellites).

L'unité de mesure inertielle 2 (appelée en anglais « Inertiel Measurement Unit ») est connue en elle-même. Elle est configurée pour fournir des mesures inertielles. Typiquement, l'unité de mesure inertielle comprend des capteurs inertiels tels que des gyromètres et des accéléromètres. Les mesures inertielles peuvent ainsi comprendre des vitesses angulaires et des accélérations.

Le module de localisation 4 est configuré pour produire une autre estimée de la même grandeur de navigation du porteur. Autrement dit, l'unité de localisation 4 et le récepteur 1 de signaux satellite constituent deux estimateurs indépendants de cette même grandeur de navigation.

De manière plus générale, le module de localisation 4 est configuré pour produire une estimée d'un état de navigation du porteur, cet état de navigation n'étant pas forcément limité à la grandeur de navigation en discussion, mais pouvant comprendre une pluralité de grandeurs de navigation, telles qu'une position du porteur, une vitesse du porteur, une attitude du porteur, etc.).

Le module de localisation 4 produit des estimées de la grandeur périodiquement, par exemple selon une deuxième fréquence différente de celle du récepteur 1, voire supérieure à celle du récepteur 1. Par exemple, la fréquence de produit d'estimée par le module de localisation 4 est 100 Hz (cent estimées par seconde).

L'unité de mesure inertielle et le module de localisation 4 forment ensemble une centrale inertielle.

Le module de fusion 6 est configuré pour produire une solution de navigation du porteur à partir de données estimées fournies par le récepteur 1 et par le module de localisation 4. La solution de navigation du porteur comprend une estimée consolidée de la grandeur de navigation du porteur en discussion.

Dans ce qui suit, on s'intéressera à un mode de réalisation non limitatif dans lequel la grandeur de navigation est une position du porteur. Ainsi, le récepteur 1 de signaux satellite et le module de localisation 4 fournissent des estimées différentes de la position du porteur, notées $P_{SAT}$ et $P_{IN}$, et le module de fusion 6 utilise entre autres ces positions pour générer une solution de navigation qui inclut une position consolidée du porteur.

La fusion réalisée par le module de fusion 6 est connue. Dans la littérature, on parle de couplage inertiel/satellite ou d'hybridation inertielle/satellite.

En particulier, le couplage mis en œuvre par le module de fusion 6 peut être un couplage de type « lâche » (« loose hybridization » en anglais), lorsque la fusion est réalisée à partir de la position du porteur. En variante, le couplage mis en œuvre par le module de fusion 6 est de type « serré » (« tight hybridization »). Dans cette variante, il est possible d'utiliser les pseudo-ranges satellites comme observation pour la fusion.

Le module de fusion 6 et le module de localisation 4 mettent conjointement en œuvre un filtre de Kalman.

De façon connue en soit, un filtre de Kalman est un estimateur à réponse impulsionnelle infinie qui estime l'état d'un système dynamique. Ici, le système dynamique est le porteur, et l'état estimé est l'état de navigation mentionné plus haut.

Un filtre de Kalman met en œuvre deux étapes fondamentales : une étape de propagation, aussi appelée étape de prédiction dans la littérature, et une étape de mise à jour.

L'étape de propagation prend en entrée une précédente estimée a posteriori de l'état de navigation $\hat{x}_{k-1|k-1}$ (associée à un instant $t_{k-1}$), et génère une estimée prédite ou a priori de l'état de navigation $\hat{x}_{k-1|k-1}$ (associée à un instant $t_k$), en s'aidant notamment d'une matrice de propagation $PHI_{t_{k-1} \to t_k}$.

Au cours de l'étape de propagation, le filtre Kalman prend également en entrée une matrice de covariance a posteriori estimée à l'état précédent, notée $P_{k-1|k-1}$ et associée à la précédente estimée de l'état de navigation $\hat{x}_{k-1|k-1}$, et génère sur sa base une estimée prédite ou a priori de la matrice de covariance, notée $P_{k|k-1}$ et associée à l'estimée $\hat{x}_{k|k-1}$. Le filtre de Kalman utilise pour cela la matrice de propagation $PHI_{t_{k-1} \to t_k}$, ainsi qu'une matrice de covariance de bruit d'évolution notée $Q_k$.

Dans la théorie, on a

$$PHI_{t_{k-1} \to t_k} = e^{\int_{t_{k-1}}^{t_k} F(t)dt}$$

où F vérifie :

$$x(t) = F(t)x(t)$$

En mathématiques numériques, on peut voir l'intégrale apparaissant dans cette formule comme une somme de termes élémentaire se rapportant à des sous-intervalles élémentaires contigus de l'intervalle allant de $t_{k-1}$ à $t_k$. Ainsi, la matrice de propagation $PHI_{t_{k-1} \to t_k}$ peut dans la pratique être calculée comme le produit de matrices de propagation élémentaires respectivement associées à ces sous-intervalles élémentaires.

L'étape de mise à jour génère une estimée a posteriori de l'état de navigation, notée $\hat{x}_{k|k}$, à partir de l'estimée prédite a priori de l'état de navigation $\hat{x}_{k|k-1}$, d'observations $Y_k$ et d'une matrice d'observation H. L'étape de mise à jour génère par ailleurs une matrice de covariance $P_{k|k}$ associée, à partir de la matrice de covariante a priori $P_{k|k-1}$ et de la matrice d'observation.

Les données $\hat{x}_{k|k}$ et $P_{k|k}$ produites lors de la mise à jour sont ensuite utilisée comme données d'entrée dans une nouvelle mise en œuvre de l'étape de propagation du filtre de Kalman.

Dans le système d'aide à la navigation représenté sur la figure 1, les étapes de propagation et de mise à jour de la matrice de covariance $P_{k|k}$ sont mises en œuvre par le module de fusion 6. Ainsi, le module de fusion 6 utilise la matrice de propagation $PHI_{t_{k-1} \to t_k}$ discutée précédemment.

Par ailleurs, les étapes de propagation et de mises à jour de l'état de la navigation $\hat{x}_{k|k}$ sont réalisées par le module de localisation 4. Le filtre de Kalman utilise les données fournies par l'unité de mesure inertielle comme observations lors de cette étape de mise à jour.

A chaque fois que le module de fusion 6 met en œuvre une propagation au sens de Kalman, le module de fusion 6 communique au module d'intégrité 8 certaines données, dont la matrice de propagation qu'il vient d'utiliser pour cette propagation. Dans la suite, ces données sont par convention appelées « données de Kalman » pour indiquer que ce sont des données impliquées dans la mise en œuvre du filtre de Kalman.

Le module d'intégrité 8 est configuré pour mettre en œuvre un traitement itératif qui sera décrit ci-après, à partir de données fournies par le récepteur 1, et de données fournies par le module de fusion 6.

Le module d'intégrité 8 est calé sur la période de fonctionnement du module de localisation 4.

Le module d'intégrité 8 a par ailleurs accès à une mémoire en lecture et en écriture. Cette mémoire est adaptée pour mémoriser des données reçues par le module d'intégrité 8 ou générées par le module d'intégrité 8.

Sur le plan matériel, le système d'aide à la navigation peut comprendre un ou plusieurs processeurs pour réaliser les traitements du module de localisation 4, du module de fusion 6 et du module d'intégrité 8. Ces modules peuvent être différentes parties d'un programme d'ordinateur exécuté par le ou chaque processeur. En variante, ces modules sont des circuits électroniques distincts.

Le système d'aide à la navigation comprend en outre une mémoire à laquelle au moins le module d'intégrité 8 a accès. La mémoire est adaptée pour mémoriser des données reçues ou générées par le module d'intégrité. La mémoire est de n'importe quel type : RAM, EEPROM, HDD, SDD, Flash, etc.

Cette mémoire stocke typiquement un programme d'ordinateur comprenant des instructions de code pour l'exécution d'un procédé mis en œuvre par le module d'intégrité 8, et qui va être décrit ci-dessous.

**2) Procédé d'aide à la navigation**

Un procédé mis en œuvre par le module d'intégrité 8 est itératif, dans le sens où il comprend des itérations successives.

On va décrire une itération de ce procédé, que l'on appelle par convention itération courante. Cette itération courante est précédée d'une itération précédente.

L'itération courante est associée à un instant courant t auquel le récepteur 1 est censé fournir un rayon de protection $HPL_{RAIM}$ se rapportant à une estimée que le récepteur 1 fournit par ailleurs au module de fusion 6.

L'itération précédente est donc similairement associée à un instant précédent, séparé de l'instant courant t par la période de fonctionnement du récepteur 1.

L'itération courante associée à l'instant courant t comprend les étapes suivantes.

Le module d'intégrité 8 reçoit des données de Kalman, qui sont fournies par le module de fusion 6. Les données de Kalman comprennent en particulier la matrice de covariance *a priori* résultant de la dernière prédiction mise en œuvre par le filtre de Kalman. On verra toutefois dans la suite que ces données de Kalman peuvent comprendre également d'autres données.

Le module d'intégrité 8 évalue si un rayon de protection $HPL_{RAIM}(t)$ associé à l'instant t est disponible. Quand ce rayon $HPL_{RAIM}(t)$ est disponible, ce rayon est reçu par le module d'intégrité 8. Le module d'intégrité 8 perçoit donc le rayon de protection $HPL_{RAIM}$ comme un rayon de protection d'entrée associé à l'instant t.

Le module d'intégrité 8 sélectionne une donnée sur la base de l'évaluation de disponibilité. Autrement dit, la sélection réalisée dépend du caractère disponible ou indisponible du rayon $HPL_{RAIM}$ à l'instant t. On verra dans la suite que la donnée à sélectionner a différents modes de réalisation.

Lorsque le rayon de protection d'entrée $HPL_{RAIM}(t)$ est disponible, la donnée sélectionnée est une donnée courante obtenue à l'itération courante, et dépendant du rayon de protection d'entrée $HPL_{RAIM}(t)$. Par convention, dans le présent texte, « X dépend de Y » couvre le cas particulier X=Y. Ceci veut dire que la donnée sélectionnée peut être $HPL_{RAIM}(t)$, comme on va le voir dans la suite.

Lorsque le rayon de protection d'entrée $HPL_{RAIM}(t)$ est indisponible, la donnée sélectionnée est une donnée précédente ayant été sélectionnée lors d'une mise en œuvre de l'étape de sélection réalisée au cours de l'itération précédente. Ce mécanisme permet ainsi de remonter à la donnée correspondante qui dépendait du dernier rayon de protection fourni par le récepteur, et ce même si le récepteur 1 a basculé dans un état d'indisponibilité et qu'il se trouve toujours dans cet état à l'itération courante.

Ensuite, le module d'intégrité 8 détermine au moins un rayon de protection de sortie à partir de la donnée sélectionnée et des données de Kalman. On verra dans la suite que cette étape de détermination a également différents modes de réalisation.

**2.1) Procédé d'aide à la navigation - Mode de réalisation 1**

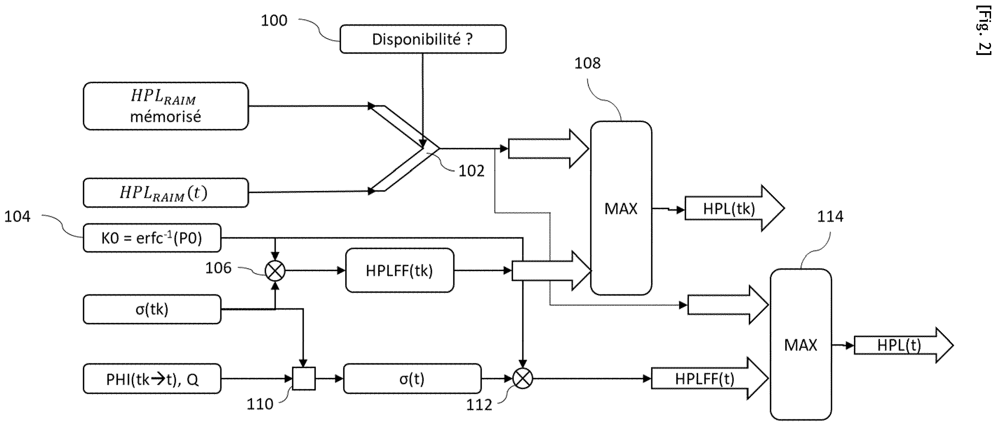

On a représenté sur la figure 2 un premier mode de réalisation du procédé d'aide à la navigation dont les principes généraux ont été décrits plus haut.

L'étape d'évaluation de disponibilité est référencée 100, et l'étape de sélection est référencée 102 sur cette figure.

Dans ce premier mode de réalisation, la donnée qui fait l'objet de la sélection 102 est le rayon de protection d'entrée $HPL_{RAIM}(t)$ lui-même, lorsque celui-ci est disponible pour l'instant t courant. Si ce rayon n'est pas disponible, alors il est sélectionné le rayon de protection $HPL_{RAIM}$ qui avait lui-même été sélectionné lors de la même étape de sélection de l'itération précédente. Avec ce mécanisme, le rayon de protection $HPL_{RAIM}$ sélectionné est le dernier rayon de protection fourni par le récepteur 1, juste avant que le récepteur 1 bascule dans une phase d'indisponibilité.

Après la sélection 102, le $HPL_{RAIM}$ mémorisé est mis à jour avec le $HPL_{RAIM}$ qui a été sélectionné.

Dans le cadre de la description de ce premier mode de réalisation, on adopte les notations suivantes :

- $HPL_{RAIM}(t)$ : rayon de protection fourni par le récepteur 1 pour l'instant t, si disponible
- $HPL_{RAIM}$ mémorisé : rayon de protection ayant été sélectionné à l'itération précédente (donc associé à l'instant qui précède t) et mémorisé dans la mémoire accessible par le module d'intégrité 8.
- $t_k$ : instant d'arrivée de la dernière prédiction réalisée par le filtre de Kalman, au sein du module de fusion 6. Cet instant $t_k$ précède l'instant courant t.
- $\sigma(t_k)$: écart-type se rapportant à la grandeur de navigation, calculé à partir de la matrice de covariance $P_{k|k}$ estimée par le filtre de Kalman lors de la dernière prédiction réalisée. Cette matrice de covariance $P_{k|k}$ estimée fait partie des données résultant de cette dernière prédiction ; elle est donc associée à l'instant d'arrivée $t_k$. Cette matrice de covariance $P_{k|k}$ estimée fait partie des données de Kalman que le module d'intégrité 8 reçoit dans le cadre de l'itération courante associée à l'instant t. En variante, le module d'intégrité 8 reçoit directement l'écart-type $\sigma(t_k)$ qui en est issu.
- $PHI_{t_k \to t}$: matrice d'évolution permettant de propager la matrice de covariance estimée de l'instant d'arrivée $t_k$ à l'instant courant t. Cette matrice peut être fournie par le module de fusion 6, auquel cas elle fait partie des données de Kalman.
- Q : matrice de covariance de bruit d'évolution permettant de propager la matrice de covariance de l'instant d'arrivée $t_k$ à l'instant courant t. Cette matrice est fournie par le module de fusion 6, elle fait partie des données de Kalman.

Le calcul de l'écart type $\sigma(t_k)$ à partir de la matrice de covariance $P_{k|k}$ peut être réalisé comme suit. La matrice de covariance $P_{k|k}$ comprend un ou plusieurs termes diagonaux qui se rapportent spécifiquement à la grandeur de navigation considérée (ici, la position du porteur). Par exemple, si la position du porteur est un triplet de coordonnées, trois termes diagonaux de la matrice de covariance $P_{k|k}$ se rapportent à la position. l'écart type $\sigma(t_k)$ est calculé comme la racine de l'un de ces termes diagonaux, par exemple celui qui est de valeur maximale.

On notera par ailleurs que l'instant t n'est normalement pas l'un des instants $t_i$ vus par le filtre de Kalman. On a donc en principe : $t_k < t < t_{k+1}$. Or, on a vu précédemment que la matrice d'évolution $PHI_{t_{k-1} \to t_k}$ est calculable comme le produit de matrices élémentaires. La matrice $PHI_{t_k \to t}$ est calculable de la même manière, sur la base des matrices élémentaires se rapportant aux sous-intervalles élémentaires qui forme l'intervalle allant de $t_k$ à t. On a donc :

$$PHI_{t_k \to t_{k+1}} = PHI_{t_k \to t} . PHI_{t \to t_{k+1}}$$

Cette équation illustre le fait que $PHI_{t_k \to t}$ constitue une matrice d'évolution « partielle » par rapport à la matrice $PHI_{t_k \to t_{k+1}}$ utilisée par le filtre de Kalman.

Dans une étape 104, le module d'intégrité 8 calcule un coefficient de référence K0 à partir d'une valeur de probabilité P0 prédéfinie.

Le coefficient de référence K0 est calculé de sorte à satisfaire la formule suivante :

$$P0 = Probabilité \left( |e| > K0 . \sigma(t) \right)$$

Dans cette égalité, $e$ désigne l'erreur qui entache l'estimée fournie par le récepteur 1 de signaux satellites à l'instant courant t.

Ainsi, le coefficient de référence K0 que l'on calcule à l'étape 104 est tel que la valeur P0 est égale à la probabilité que la valeur absolue de l'erreur qui entache l'estimée fournie par le récepteur 1 de signaux satellites à l'instant courant t soit supérieure à K0 fois l'écart type $\sigma(t)$.

De façon générale, la formule de calcul du rayon de protection en fonction de la loi $f$ de densité de probabilité suivie par la variable aléatoire x constituée par l'erreur dont on doit borner l'amplitude par une valeur « B » (généralement noté « Rayon de protection ») s'écrit :

$$Probabilité(|e| > B) = 1 - \int_{-B}^{B} f(x).\,dx$$

Lorsque la variable aléatoire en discussion est de dimension 1 et qu'elle suit une loi de densité de probabilité gaussienne, et on peut en particulier écrire :

$$P0 = Proba\big(|e| > K0.\,\sigma(t)\big) = 1 - \int_{-K0.\sigma(t)}^{K0.\sigma(t)} \frac{1}{\sigma(t).\sqrt{2\pi}}.\,e^{\frac{-x^2}{2.\sigma(t)^2}}.\,dx$$

Il suffit d'inverser cette formule pour calculer la borne K0 en fonction de la probabilité P0 (en choisissant $B = K0.\sigma(t_k)$) :

$$B = erfc^{-1}(P0)$$

où « erfc » est la fonction d'erreur complémentaire, par exemple sous forme tabulée.

Ce calcul peut être généralisé à des dimensions supérieures à 1. Ce calcul est à la portée de l'homme du métier.

Dans une étape 106, le module d'intégrité 8 calcule un rayon de protection intermédiaire noté $HPLFF(t_k)$, associé à l'instant d'arrivée $t_k$, comme le produit entre le coefficient de référence K0 et l'écart-type $\sigma(t_k)$. On a donc :

$$HPLFF(t_k) = K0.\,\sigma(t_k)$$

Dans une étape 108, le module d'intégrité 8 détermine le maximum entre le rayon de protection intermédiaire $HPLFF(t_k)$ et le rayon de protection $HPL_{RAIM}$ sélectionnée à l'étape de sélection (qui est soit le $HPL_{RAIM}(t)$ courant disponible soit le $HPL_{RAIM}$ mémorisé à l'itération précédente en cas d'indisponibilité).

Le maximum sélectionné constitue un rayon de protection de sortie $HPL(t_k)$ associé à l'instant d'arrivée $t_k$. Ce rayon de protection est une donnée de sortie du module d'intégrité 8 actualisée par rapport au dernier $HPL_{RAIM}$ connu, à la suite d'une indisponibilité du récepteur 1.

Dans une étape 110, le module d'intégrité 8 calcule un écart-type $\sigma(t)$ associé à l'instant courant t, par une propagation de l'écart-type $\sigma(t_k)$ à l'aide de la matrice d'évolution $PHI_{t_k \to t}$ et de la matrice de covariance de bruit d'évolution Q. L'écart-type $\sigma(t)$ est calculé à partir de la matrice de covariance $P(t|t_k)$ qui est solution de l'équation suivante:

$$P(t|t_k) = PHI_{t_k \to t}.\,P(t_k|t_k).\,PHI_{t_k \to t}{'} + Q$$

Dans cette équation le prime «'» désigne l'opérateur transposée.

Dans une étape 112, le module d'intégrité 8 calcule un rayon de protection intermédiaire HPLFF(t) associé à l'instant courant t comme un produit entre le coefficient de référence K0 et l'écart-type $\sigma(t)$. On a donc :

$$HPLFF(t) = K0.\,\sigma(t)$$

Dans une étape 114, le module d'intégrité 8 détermine le maximum entre le rayon de protection intermédiaire HPLFF(t) et le rayon de protection $HPL_{RAIM}$ sélectionné à l'étape de sélection 112 (qui est soit le $HPL_{RAIM}(t)$ courant disponible soit le $HPL_{RAIM}$ mémorisé à l'itération précédente en cas d'indisponibilité).

Le maximum sélectionné constitue un rayon de protection de sortie HPL(t) associé à l'instant courant t. Ce rayon de protection est une donnée de sortie du module d'intégrité 8 actualisée par rapport au dernier $HPL_{RAIM}$ connu, à la suite d'une indisponibilité du récepteur 1, et plus récente que le rayon de protection de sortie $HPL(t_k)$, étant donné que $t_k$ est antérieur à t (il a pu s'écouler un temps depuis la dernière prédiction réalisée par le filtre de Kalman au sein du module de fusion 6).

### 2.2) Procédé d'aide à la navigation - mode de réalisation 2

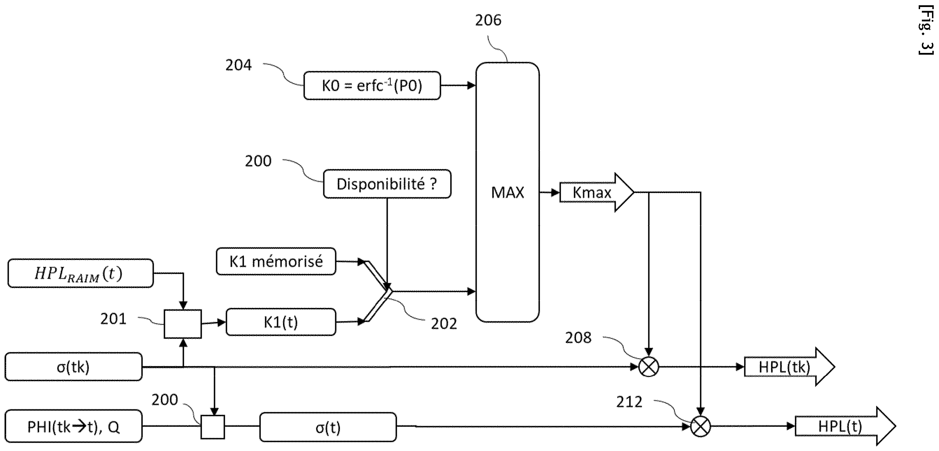

On a représenté sur la figure 3 un deuxième mode de réalisation du procédé d'aide à la navigation dont les principes généraux ont été décrits plus haut.

Les étapes de ce deuxième mode de réalisation sont les suivantes.

L'étape d'évaluation de disponibilité du rayon de protection $HPL_{RAIM}(t)$, notée 200, est mise en œuvre par le module d'intégrité 8.

Si le rayon de protection d'entrée $HPL_{RAIM}(t)$ s'avère disponible, le module d'intégrité 8 calcule dans une étape 201 un coefficient de pondération courant K1(t) comme un rapport entre le rayon de protection d'entrée $HPL_{RAIM}(t)$ associé à l'instant courant t et l'écart-type $\sigma(t)$ déjà discuté dans le cadre de la description du premier mode de réalisation. On a donc :

$$K1(t) = \frac{HPL_{RAIM}(t)}{\sigma(t)}$$

L'étape de sélection est référencée 202 sur cette figure.

Dans ce deuxième mode de réalisation, la donnée qui fait l'objet de la sélection 202 est le coefficient de pondération courant K1(t) calculé à l'étape 201 et qui dépend du rayon de protection d'entrée $HPL_{RAIM}(t)$. Si ce rayon $HPL_{RAIM}(t)$ n'est pas disponible, alors il est sélectionné à l'étape 202 un coefficient K1 mémorisé, qui a été sélectionné lors de la même étape de sélection de l'itération précédente. Avec ce mécanisme, le coefficient K1 sélectionné est un coefficient qui dépend du dernier rayon de protection fourni par le récepteur 1, juste avant que le récepteur 1 bascule dans une phase d'indisponibilité.

Après la sélection 202, le K1 mémorisé est mis à jour avec le K1 qui a été sélectionné.

Dans une étape 204, le module d'intégrité 8 calcule le coefficient de référence K0 à partir de la valeur de probabilité P0 prédéfinie. Cette étape est identique à l'étape 104 du premier mode de réalisation.

Dans une étape 206, le module d'intégrité 8 détermine le maximum, noté Kmax, entre le coefficient de référence K0 et le coefficient K1 sélectionné.

Dans une étape 208, le module d'intégrité 8 détermine un rayon de protection de sortie HPL($t_k$) associé à l'instant courant $t_k$, en calculant le produit entre le coefficient Kmax et l'écart-type $\sigma(t_k)$. On a donc :

$$HPL(t_k) = Kmax.\sigma(t_k)$$

Comme dans le premier mode de réalisation, ce rayon de protection HPL($t_k$) est une donnée de sortie du module d'intégrité 8 actualisée par rapport au dernier $HPL_{RAIM}$ connu, à la suite d'une indisponibilité du récepteur 1.

Dans une étape 210, le module d'intégrité 8 calcule l'écart-type $\sigma(t)$ associé à l'instant courant t, par une propagation de l'écart-type $\sigma(t_k)$ à l'aide de la matrice d'évolution $PHI_{t_k}{\rightarrow}t$ et de la matrice de covariance de bruit d'évolution Q. Cette étape 210 est identique à l'étape 110 du premier mode de réalisation.

Dans une étape 212, le module d'intégrité 8 détermine un rayon de protection de sortie HPL(t) associé à l'instant courant t, en calculant le produit entre le coefficient Kmax et l'écart-type $\sigma(t)$. On a donc :

$$HPL(t) = Kmax.\sigma(t)$$

Ce rayon de protection HPL(t) est une donnée de sortie du module d'intégrité 8 actualisée par rapport au dernier $HPL_{RAIM}$ connu, à la suite d'une indisponibilité du récepteur 1, et plus récente que le rayon de protection de sortie HPL($t_k$), étant donné que $t_k$ est antérieur à t.

On voit que le procédé selon le deuxième mode de réalisation produit deux rayons de protection pour les instants $t_k$ et t, comme le procédé selon le premier mode de réalisation. Toutefois, le deuxième mode de réalisation procure un avantage notable par rapport au premier mode de réalisation : il permet d'assurer une continuité dans les données de sortie du module d'intégrité 8 lors d'une perte de disponibilité, ce que ne permet pas de faire le premier mode de réalisation.

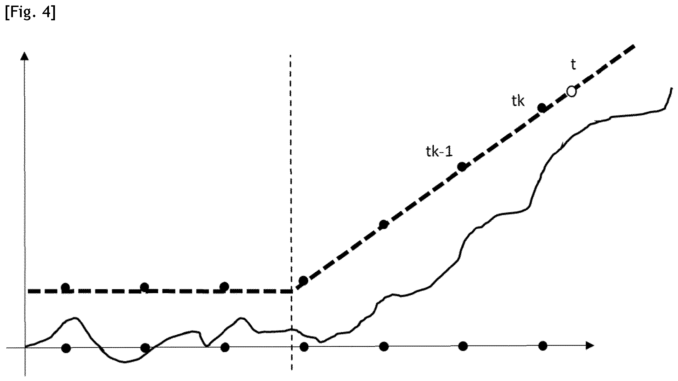

On a représenté sur la figure 4 des courbes qui illustrent cette continuité. La courbe irrégulière représente l'évolution au cours du temps de l'erreur qui entache l'estimée fournie par le récepteur 1 au module de fusion (typiquement une erreur de position du porteur). Bien entendu, la vraie position du porteur n'est pas connue, donc cette erreur n'est pas connue non plus. On distingue dans le temps deux périodes séparées par une ligne verticale en pointillés : à gauche, une période de disponibilité du récepteur, et à droite, une période d'indisponibilité du récepteur. Les points noirs représentent les instants perçus par le filtre de Kalman ; ces instants sont donc séparés temporellement selon la deuxième fréquence discutée précédemment. Le point blanc désigne un instant courant t au cours de la période d'indisponibilité. On voit bien que t est postérieur à $t_k$, et antérieur à $t_{k+1}$, du fait que le récepteur fonctionne à une première fréquence différente de la deuxième fréquence. La courbe en pointillés est une courbe d'évolution du rayon de protection généré par le module d'intégrité 8. Dans cet exemple schématique, il est fait l'hypothèse que ce rayon de protection reste constant durant la période de disponibilité du récepteur (à gauche de la ligne verticale en pointillés). Cette courbe se prolonge continûment dans la période d'indisponibilité du récepteur 1, à droite de la ligne verticale en pointillés. Cette continuité est obtenue grâce aux étapes du procédé selon le mode de réalisation.

**2.3) Autres modes de réalisation**

Dans le premier mode de réalisation et dans le deuxième mode de réalisation discutés ci-dessus, le module d'intégrité 8 génère deux rayons de protection distincts : le rayon de protection HPL($t_k$) associé à l'instant $t_k$ et le rayon de protection HPL(t) associé à l'instant courant t. En variante, le module d'intégrité ne génère que le rayon de protection HPL($t_k$) ou que le rayon de protection HPL(t).

Dans le deuxième mode de réalisation, les étapes 204 et 206 sont optionnelles. En l'absence de ces étapes, le coefficient K1 sélectionné à l'étape de sélection 202 est directement utilisé à la place de Kmax dans les étapes 208 et 212. Néanmoins, ces étapes ont pour avantage de majorer le rayon de protection avec une valeur conservative du coefficient K et ainsi fournir une majoration du rayon de protection.

Par ailleurs, les rayons de protections peuvent être des rayons de protection horizontaux (d'où le H dans leur nom) ou bien en variante être des rayons de protection verticaux.

**Revendications**

1. Procédé itératif mis en œuvre par ordinateur, le procédé comprenant une itération courante associée à un instant courant (t) et une itération précédente associée à un instant précédent, l'itération courante comprenant les étapes suivantes :

   • réception de données de Kalman comprenant :

     • une matrice de covariance estimée, la matrice de covariance estimée résultant d'une dernière prédiction mise en œuvre par un filtre de Kalman,

   • évaluation de disponibilité (100, 200) d'un rayon de protection d'entrée ($HPL_{RAIM}(t)$) associé à l'instant courant (t), résultant d'un contrôle autonome d'intégrité de récepteur, RAIM, mis en œuvre par un récepteur de signaux satellites, et se rapportant à l'estimée d'une grandeur de navigation d'un porteur, l'estimée étant fournie par le récepteur de signaux satellites,
   • sélection (102, 202) d'une donnée sur la base de l'évaluation de disponibilité, dans lequel :

     • lorsque le rayon de protection d'entrée ($HPL_{RAIM}(t)$) est disponible, la donnée sélectionnée est une donnée courante obtenue à l'itération courante, et dépendant du rayon de protection d'entrée ($HPL_{RAIM}(t)$),
     • lorsque le rayon de protection d'entrée ($HPL_{RAIM}(t)$) est indisponible, la donnée sélectionnée est une donnée précédente ayant été sélectionnée lors d'une mise en œuvre de l'étape de sélection réalisée au cours de l'itération précédente,

     • détermination (108, 114, 208, 212) d'un rayon de protection de sortie (HPL($t_k$), HPL(t)) à partir de la donnée sélectionnée et des données de Kalman.

2. Procédé selon la revendication précédente, dans lequel la matrice de covariance estimée est associée à un instant d'arrivée ($t_k$) de la dernière prédiction, l'instant d'arrivée ($t_k$) étant antérieur à l'instant courant (t).

3. Procédé selon la revendication précédente, dans lequel l'instant courant est antérieur à un instant d'arrivée ($t_{k+1}$) d'une prochaine prédiction mise en œuvre par le filtre de Kalman.

4. Procédé selon l'une quelconque des revendications précédentes, dans lequel :

   • la matrice de covariance estimée est associée à un instant d'arrivée ($t_k$) de la dernière prédiction mise en œuvre par le filtre de Kalman,
   • à l'étape de détermination, il est déterminé (108, 208) un rayon de protection de sortie (HPL($t_k$)) associé à l'instant d'arrivée ($t_k$), à partir de la donnée sélectionnée et de la matrice de covariance estimée.

5. Procédé selon l'une quelconque des revendications précédentes, dans lequel :

   • la matrice de covariance estimée est associée à un instant d'arrivée ($t_k$) de la dernière prédiction mise en œuvre par le filtre de Kalman,
   • les données de Kalman comprennent en outre :

• une matrice d'évolution ($PHI_{t_k \to t}$) permettant de propager la matrice de covariance estimée de l'instant d'arrivée ($t_k$) à l'instant courant (t),
• une matrice de covariance de bruit d'évolution (Q) permettant de propager la matrice de covariance estimée de l'instant d'arrivée ($t_k$) à l'instant courant (t),

• à l'étape de détermination, il est déterminé (114, 212) un rayon de protection de sortie (HPL(t)) associé à l'instant courant (t), à partir de la donnée sélectionnée, de la matrice de covariance estimée, de la matrice d'évolution ($PHI_{t_k \to t}$) et de la matrice de covariance de bruit d'évolution (Q).

6. Procédé selon l'une quelconque des revendications précédentes, dans lequel le filtre de Kalman utilise des données fournies par une unité de mesure inertielle comme observations.

7. Procédé selon l'une quelconque des revendications précédentes, dans lequel la donnée courante est un coefficient de pondération courant (K1 courant) calculé (201) comme un rapport entre :

• le rayon de protection d'entrée ($HPL_{RAIM}(t)$) associé à l'instant courant (t), et
• un écart-type ($\sigma(t_k)$) se rapportant à la grandeur de navigation du porteur, calculé à partir de la matrice de covariance estimée.

8. Procédé selon la revendication précédente dans sa dépendance à la revendication 4, dans lequel le rayon de protection de sortie (HPL($t_k$)) associé à l'instant d'arrivée ($t_k$) est calculé (208) comme un produit entre :

• un coefficient de pondération (Kmax) dépendant de la donnée sélectionnée, et
• l'écart-type ($\sigma(t_k)$) se rapportant à la grandeur de navigation du porteur.

9. Procédé selon l'une quelconque des revendications 7 et 8 dans leur dépendance à la revendication 5, dans lequel le rayon de protection de sortie (HPL(t)) associé à l'instant courant (t) est calculé (212) comme un produit entre :

• un coefficient de pondération (Kmax) dépendant de la donnée sélectionnée, et
• un écart-type ($\sigma(t_k)$) associé à l'instant courant (t) résultant (200) d'une propagation de l'écart-type ($\sigma(t_k)$) se rapportant à la grandeur de navigation du porteur à l'aide de la matrice d'évolution ($PHI_{t_k \to t}$) et de la matrice de covariance de bruit d'évolution (Q).

10. Procédé selon l'une quelconque des revendications 8 et 9, comprenant des étapes de :

• calcul (204) d'un coefficient de référence K0 à partir d'une valeur de probabilité p prédéfinie, le coefficient de référence K0 satisfaisant la formule suivante :

$$p = Probabilit\acute{e}\left(|e| > K0.\,\sigma(t_k)\right)$$

où e désigne l'erreur qui entache l'estimée fournie par le récepteur de signaux satellites, et $\sigma(t_k)$ désigne l'écart-type se rapportant à la grandeur de navigation du porteur,
• détermination (206) d'un maximum (Kmax) entre la donnée sélectionnée et le coefficient de référence (K0), le maximum constituant le coefficient de pondération dépendant de la donnée sélectionnée.

11. Procédé selon l'une quelconque des revendications 1 à 6, dans lequel la donnée courante est le rayon de protection d'entrée ($HPL_{RAIM}(t)$).

12. Procédé selon la revendication précédente dans sa dépendance à la revendication 4, comprenant des étapes de :

• calcul (104) d'un coefficient de référence (K0) à partir d'une valeur de probabilité P0 prédéfinie, le coefficient de référence (K0) satisfaisant la formule suivante :

$$P0 = Probabilit\acute{e}\left(|e| > K0.\,\sigma(t_k)\right)$$

où e désigne l'erreur qui entache l'estimée fournie par le récepteur de signaux satellites, et $\sigma(t_k)$ désigne un écart-type se rapportant à la grandeur de navigation du porteur et calculé à partir de la matrice de covariance estimée,
• calcul (106) d'un rayon de protection intermédiaire (HPLFF($t_k$)) associé à l'instant d'arrivée ($t_k$), le rayon de protection intermédiaire étant calculé comme un produit entre :

> • le coefficient de référence (K0), et
> • l'écart-type ($\sigma(t_k)$) se rapportant à la grandeur de navigation du porteur,

• le rayon de protection de sortie (HPL($t_k$)) associé à l'instant d'arrivée ($t_k$) étant un maximum (108) entre :

> • la donnée sélectionnée, et
> • le rayon de protection intermédiaire ((HPLFF($t_k$)) associé à l'instant d'arrivée ($t_k$).

**13.** Procédé selon l'une quelconque des revendications 11 et 12 dans leur dépendance à la revendication 5,

> • calcul (104) d'un coefficient de référence K0 à partir d'une valeur de probabilité P0 prédéfinie, le coefficient de référence K0 satisfaisant la formule suivante :

$$P0 = Probabilité\left(|e| > K0.\sigma(t_k)\right)$$

où e désigne l'erreur qui entache l'estimée fournie par le récepteur de signaux satellites, et $\sigma(t_k)$ désigne un écart-type se rapportant à la grandeur de navigation du porteur et calculé à partir de la matrice de covariance estimée,
• calcul (112) d'un rayon de protection intermédiaire (HPLFF(t)) associé à l'instant courant (t) comme un produit entre :

> • le coefficient de référence K0, et
> • un écart-type associé à l'instant courant (t) résultant d'une propagation de l'écart-type ($\sigma(t_k)$) à l'aide de la matrice d'évolution ($PHI_{tk \to t}$) et de la matrice de covariance de bruit d'évolution (Q),

> • le rayon de protection de sortie (HPL(t)) associé à l'instant courant (t) étant un maximum (114) entre :

> • la donnée sélectionnée, et
> • le rayon de protection intermédiaire ((HPLFF(t)) associé à l'instant courant (t).

**14.** Procédé selon l'une quelconque des revendications précédentes, dans lequel la grandeur de navigation du porteur est une position du porteur.

**15.** Produit programme d'ordinateur comprenant des instructions de code de programme pour l'exécution des étapes du procédé selon l'une des revendications précédentes, lorsque ce programme est exécuté par un ordinateur.

**16.** Système d'aide à la navigation d'un porteur, le système comprenant :

> • un récepteur (1) de signaux satellites configuré pour fournir une estimée d'une grandeur de navigation du porteur, et pour mettre en œuvre un contrôle autonome d'intégrité de récepteur (RAIM) produisant un rayon de protection se rapportant à l'estimée de la donnée de mouvement du porteur,
> • une centrale inertielle (2, 4) configurée pour fournir une autre estimée de la grandeur de navigation du porteur,
> • un module d'hybridation (6) configuré pour coupler des données incluant l'estimée fournie par le récepteur de signaux satellite et l'autre fournie par la centrale inertielle, de sorte à produire une solution de navigation incluant une estimée consolidée de la grandeur de navigation du porteur,
> • un module de traitement (8) configuré pour mettre en œuvre le procédé itératif selon l'une quelconque des revendications précédentes.

[Fig. 1]

[Fig. 2]

[Fig. 3]

EP 4 589 340 A1

16

[Fig. 4]

Europäisches
Patentamt

European
Patent Office

Office européen
des brevets

# RAPPORT DE RECHERCHE EUROPEENNE

Numéro de la demande

EP 25 30 5056

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | GROSCH A ET AL: "Parameter Study of Loosely Coupled INS/GNSS Integrity Performance", POSITION LOCATION AND NAVIGATION SYMPOSIUM (PLANS), 2012 IEEE/ION, IEEE, US, 12 juillet 2012 (2012-07-12), pages 230-238, XP056003766, DOI: 10.1109/PLANS.2012.6236885 ISBN: 978-1-4673-0387-3 | 1-9,11, 14-16 | INV. G01S19/20 |
| A | * pages 234-235, section V * | 10,12,13 | |
| A | ANJA GROSCH ET AL: "Redundant inertial-aided GBAS for civil aviation", SATELLITE NAVIGATION TECHNOLOGIES AND EUROPEAN WORKSHOP ON GNSS SIGNALS AND SIGNAL PROCESSING (NAVITEC), 2010 5TH ESA WORKSHOP ON, IEEE, 8 décembre 2010 (2010-12-08), pages 1-6, XP031898927, DOI: 10.1109/NAVITEC.2010.5708058 ISBN: 978-1-4244-8740-0 * page 1, dernier alinéa * | 1-16 | |
| A | CN 116 859 417 A (UNIV HARBIN ENG) 10 octobre 2023 (2023-10-10) * alinéa [0037] - alinéa [0056] * * alinéa [0060] - alinéa [0072] * | 1-16 | |

DOMAINES TECHNIQUES RECHERCHES (IPC)

G01S

-/--

Le présent rapport a été établi pour toutes les revendications

| Lieu de la recherche | Date d'achèvement de la recherche | Examinateur |
|---|---|---|
| Munich | 26 mai 2025 | Hekmat, Taymoor |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

..........................................................................................................
& : membre de la même famille, document correspondant

EPO FORM 1503 03.82 (P04C02)

page 1 de 2

Europäisches
Patentamt

European
Patent Office

Office européen
des brevets

# RAPPORT DE RECHERCHE EUROPEENNE

Numéro de la demande

EP 25 30 5056

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | BHATTACHARYYA SUSMITA ET AL: "Kalman filter-based RAIM for GNSS receivers", IEEE TRANSACTIONS ON AEROSPACE AND ELECTRONIC SYSTEMS, IEEE SERVICE CENTER, PISCATAWAY, NJ, US, vol. 51, no. 3, 1 juillet 2015 (2015-07-01), pages 2444-2459, XP011670271, ISSN: 0018-9251, DOI: 10.1109/TAES.2015.130585 [extrait le 2015-09-21] * le document en entier * ----- | 1-16 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 26 mai 2025 | Hekmat, Taymoor |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

page 2 de 2

## ANNEXE AU RAPPORT DE RECHERCHE EUROPEENNE
## RELATIF A LA DEMANDE DE BREVET EUROPEEN NO.

EP 25 30 5056

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

26-05-2025

| Document brevet cité au rapport de recherche | Date de publication | Membre(s) de la famille de brevet(s) | Date de publication |
|---|---|---|---|
| CN 116859417 A | 10-10-2023 | AUCUN | |

Pour tout renseignement concernant cette annexe : voir Journal Officiel de l'Office européen des brevets, No.12/82

EPO FORM P0460

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Minimum Operating Performance Standard for GNSS aided inertial system. *DO-384 (document RTCA*